# EUROPÄISCHE PATENTANMELDUNG

(11) **EP 1 248 221 A2**
(43) Veröffentlichungstag der Anmeldung: **09.10.2002**
(21) Anmeldenummer: 02405265.6
(22) Anmeldetag: 04.04.2002
(51) Int. Cl.: G06F 17/60

(54) **Portfolioverwaltungssystem und Verfahren zur Portfolioverwaltung mittels DAB**

(30) Priorität: 04.04.2001 CH 100219
(71) Anmelder: RITTER, Rudolf, 3052 Zollikofen (CH); Futuris Management SA, 2855 Glovelier (CH)
(72) Erfinder: Ritter, Rudolf, 3052 Zollikofen (CH)
(74) Vertreter: BOVARD AG - Patentanwälte

(57) **Zusammenfassung**

Verfahren und System zur Wertschriften-Portfolioverwaltung, bei welchem Börsendaten verschiedener Finanzplätze von einem Financialserver (41) erfasst und ausgewertet werden und Erwartungswerte für zukünftige Kursschwankungen einzelner Titel berechnet werden, wobei die Börsendaten der Titel, deren berechneter Erwartungswert für zukünftige Kursschwankungen ausserhalb einer festgelegten Schwankungstoleranz liegt, über einen ersten Kommunikationskanal (20) ausgestrahlt werden und von Empfangsvorrichtungen (10) empfangen werden, welche Empfangsvorrichtungen (10) Zugriffsberechtigung für die Börsendaten über einen Conditionalaccessserver (31) mittels eines zweiten Kommunikationskanal (60) erhalten haben. Insbesondere werden dabei Verrechnungsdaten zur Verrechnung der mit dem Empfang der Portfolioverwaltungsdaten beanspruchten Leistung an einen Transactionsserver (51) mittels des zweiten Kommunikationskanal (60) übermittelt.

## Beschreibung

Die vorliegende Erfindung betrifft ein System zur Wertschriften-Portfolioverwaltung mittels DAB und ein entsprechendes Verfahren, bei welchem Börsendaten verschiedener Finanzplätze von einem Financialserver erfasst und ausgewertet werden, indem Erwartungswerte für zukünftige Kursschwankungen einzelner Titel berechnet werden. Insbesondere betrifft die vorliegende Erfindung ein Verfahren und ein System zur Wertschriften-Portfolioverwaltung, bei welchem die bezogenen Leistungen direkt über einen Transactionserver oder über ein Postpaid- oder Prepaid-Verfahren, z.B. mit einer Prepaid-Karte, bezahlt werden.

Besonders in den letzten Jahren hat die Börse weltweit einen ungeahnten Boom erlebt. Mit diesem Boom stieg auch das Bedürfnis nach möglichst effizienten und aktuellen Wertschriften-Portfolioverwaltungen, die ein schnelles Reagieren auf gegenwärtige oder erwartete Kursschwankungen der Titel ermöglichen. Dies gilt im Besonderen für kleine und mittlere Anleger, da kleine und mittlere Anleger meist über ein zu kleines Portfolio verfügen, um ein sinnvolles und breitabgestütztes Riskmanagement aufbauen zu können. Ihnen fehlt zudem häufig das für ein Riskmanagement notwendige Know-how, die notwendigen Marktanalysemittel und/oder Marktkenntnisse. Deshalb kann es für solche Anleger überlebenswichtig sein, auf Börsenschwankungen mit ihrem Portfolio schnell und flexibel reagieren zu können. Im Stand der Technik finden sich viele Systeme zur Verwaltung von Wertschriften-Portfolios. Dabei werden Börsendaten anhand von Algorithmen ausgewertet, um Aussagen über zukünftige Kursschwankungen zu machen. Beispiele solcher Algorithmen können u.a. in "The Point And Figure Method, Victor deVilliers, Windsor Books 1933" oder "Das grosse Buch der Technischen Indikatoren, T. Müller und H. Nietzer, Fachverlag für Wirtschaftsinformationen 1993" etc. gefunden werden. Wegen dem hochgradig nichtlinearen, chaotischen Verhalten der Börsenkurse ist es aber auch mit modernsten Vorhersagealgorithmen nicht möglich, Kursschwankungen für längere Zeiträume vorherzusagen. Dies ist ein weiterer Grund, weshalb es für den Anleger überaus wichtig ist, schnell auf die momentanen oder prognostizierten Kursschwankungen reagieren zu können. Der Stand der Technik zeigt verschiedene Systeme, welche es einem Benutzer erlauben, sein Portfolio zu verwalten, indem sie ihm Kursschwankungen von Titeln in seinem Portfolio anzeigen. Beispiele dafür zeigen z.B. die Patentschriften US6064985 "Automated portfolio management system with internet datafeed" und US6144947 "System for automatically determining net capital deductions for securities held, and process for implementing same". Bei allen Lösungen des Standes der Technik müssen die Portfolioverwaltungssysteme Zugang zu Kommunikationsverbindungen wie dem Internet, dem PSTN (Public Switched Telephone Network) etc. haben, über welche nicht nur der Zugang zu den Börsendatenservern geschieht, sondern auch die bezogenen Leistungen allenfalls verrechnet werden können.

Es ist eine Aufgabe dieser Erfindung, ein neues Verfahren zur Wertschriften-Portfolioverwaltung vorzuschlagen. Insbesondere soll die Portfolioverwaltung für die relevanten Titel stets die aktuellsten Börsendaten und Prognosen für Kursschwankungen umfassen, um damit einem Benutzer möglichst frühzeitig ein Eingreifen zu erlauben.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden die Ziele durch die Erfindung dadurch erreicht, dass Börsendaten verschiedener Finanzplätze von einem Financialserver erfasst und ausgewertet werden und Erwartungswerte für zukünftige Kursschwankungen einzelner Titel berechnet werden, wobei die Börsendaten der Titel, deren berechneter Erwartungswert für zukünftige Kursschwankungen ausserhalb einer festgelegten Schwankungstoleranz liegt, zusammen mit relevanten Daten der Auswertung der Börsendaten des entsprechenden Titels zu Portfolioverwaltungsdaten zusammengefasst werden, wobei die Portfolioverwaltungsdaten über einen ersten Kommunikationskanal zugriffskontrolliert und unidirektional übermittelt werden und von mindestens einer tragbaren, mobilen Empfangsvorrichtung eines Kunden, wie z.B. Mobilfunkgeräte, PDAs, Laptops etc., empfangen werden, wobei Zugriffsrequestdaten einer auf einer Identifizierungskarte einer tragbaren, mobilen Empfangsvorrichtung gespeicherten Identifizierung zugeordnet über einen zweiten Kommunikationskanal an einen Conditionalaccessserver übertragen werden, und wobei Zugriffsberechtigungsdaten basierend auf den Zugriffsrequestdaten vom Conditionalaccessserver an die entsprechende Empfangsvorrichtung übertragen werden, mittels welchen Zugriffsberechtigungsdaten die zugriffskontrollierten Portfolioverwaltungsdaten von der Empfangsvorrichtung entschlüsselt werden. Der erste Kommunikationskanal zur verschlüsselten und unidirektionalen Verbreitung der Portfolioverwaltungsdaten kann mindestens einem Broadcastsender umfassen. Insbesondere kann für jeden der mindestens einen Broadcastsender auf dem Financialserver ein entsprechendes Broadcastsenderprofil konfiguriert werden, das festlegt, welche Finanzmärkte und/oder Titelkategorien für den jeweiligen Broadcastsender in den Portfolioverwaltungsdaten berücksichtigt werden. Der zweite Kommunikationskanal kann ein Mobilfunknetz, wie z.B. ein GSMund/oder ein UMTS-Mobilfunknetz sein. Das Filtern der Börsendaten kann mit einem softwaremässig und/oder hardwaremässig realisierten Filtermodul des Financialserver geschehen und das Empfangen und Entschlüsseln der Portfolioverwaltungsdaten durch die mindestens eine Empfangsvorrichtung kann mittels ebenfalls softwaremässig und/oder hardwaremässig implementierten Filtermittel der mindestens einen Empfangsvorrichtung geschehen. Ein Vorteil dieser Ausführungsvariante ist, dass ein Benutzer stets über sein Mobilfunkgerät über aktuelle und/oder prognostizierte Kursschwankungen informiert ist, ohne dass er dabei sämtlich Börsendaten nach relevanten Kursbewegungen seiner Titel durchsuchen müsste. Ein anderer Vorteil ist, dass über den Broadcastkanal nur die relevanten Börsendaten, d.h. die Börsendaten aktiver Titel mit einem Handelssignal, übertragen werden. Damit kann die Bandbreite des Broadcastkanals optimal genutzt werden. Ein weiterer Vorteil liegt ebenfalls darin, dass der Conditional Access auf die zugriffskontrollierten Broadcastdaten einfach durch die Identifikation des Benutzers des Mobilfunkgerätes mittels des bereits vorhandenen Identifikationsmoduls des Mobilfunkgerätes, z.B. einer SIM-Karte, durchgeführt werden kann, ohne dass es beispielsweise spezielle Conditional Access Module von Seiten des Broadcast-Anbieters bräuchte, wie das z.T. für den Bezug kostenpflichtiger Broadcastprogramme üblich ist. Es ist zusätzlich als Vorteil zu vermerken, dass mit diesem Verfahren alle börsengängigen Titel weltweit nach den gleichen technischen Auswertungsprozessen ausgewertet und über Broadcasting ausgestrahlt werden können. Anders als der Stand der Technik ist das erfindungsgemässe Verfahren bezüglich Broadcastanbieter, Mobile Operatoren, Börsenplätze, Banken und Benutzer vollständig offen. Ein anderer Vorteil der Erfindung ist, dass wenn ein Benutzer sein Endgerät auf eine bestimmte Auswahl von Portfolioverwaltungsdaten eingestellt hat und/oder eine bestimmte Auswahl beispielsweise mehrfach trifft, diese Information z.B. an den Financialserver und/oder einen Transactionserver als Parametereinstellung zurückgemeldet werden kann. Diese Rückmeldung erfolgt, wenn der Kunde eine vorgesehene Kommunikation zum Financialserver und/oder Transactionserver vornimmt. Damit können Data Ware House (DWH) Applikationen erstellt werden um die Dienste der Broadcastanbieter resp. der Content Provider zu optimieren.

In einer Ausführungsvariante werden Börsendaten verschiedener Finanzplätze von einem Financialserver erfasst und ausgewertet und Erwartungswerte für zukünftige Kursschwankungen einzelner Titel berechnet, wobei die Börsendaten der Titel, deren berechneter Erwartungswert für zukünftige Kursschwankungen ausserhalb einer festgelegten Schwankungstoleranz liegt, zusammen mit relevanten Daten der Auswertung der Börsendaten des entsprechenden Titels zu Portfolioverwaltungsdaten zusammengefasst und an mindestens einen autorisierten Broadcastsender übermittelt werden, wobei die Portfolioverwaltungsdaten verschlüsselt und unidirektional von dem mindestens einen Broadcastsender verbreitet werden, wobei Empfangsvorrichtungen zum Empfangen der zugriffskontrollierten Portfolioverwaltungsdaten Zugriffsrequestdaten an einen oder mehrere Conditionalaccessserver über ein Mobilfunknetz übertragen und der oder die Conditionalaccessserver Zugriffsberechtigungsdaten basierend auf den Zugriffsrequestdaten an die jeweilige Empfangsvorrichtung über das Mobilfunknetz überträgt und wobei die zugriffskontrollierten Portfolioverwaltungsdaten von den Empfangsvorrichtungen empfangen und mittels der Zugriffsberechtigungsdaten entschlüsselt werden. Ein Vorteil dieser Ausführungsvariante ist, dass ein Benutzer stets über sein Mobilfunkgerät über aktuelle und/oder prognostizierte Kursschwankungen informiert ist, ohne dass er dabei sämtlich Börsendaten nach relevanten Kursbewegungen seiner Titel durchsuchen müsste. Ein anderer Vorteil ist, dass über den Broadcastkanal nur die relevanten Börsendaten übertragen werden. Damit kann die Bandbreite des Broadcastkanals optimal genutzt werden. Ein weiterer Vorteil liegt ebenfalls darin, dass der Conditional Access auf die zugriffskontrollierten Broadcastdaten einfach durch die Identifikation des Benutzers des Mobilfunkgerätes mittels des bereits vorhandenen Identifikationsmoduls des Mobilfunkgerätes, z.B. einer SIM-Karte, durchgeführt werden kann, ohne dass es beispielsweise spezielle Conditional Access Module von Seiten des Broadcast-Anbieters bräuchte, wie das z.T. für den Bezug kostenpflichtiger Broadcastprogramme üblich ist. Es ist zusätzlich als Vorteil zu vermerken, dass mit diesem Verfahren alle börsengängigen Titel weltweit nach den gleichen technischen Auswertungsprozessen ausgewertet und über Broadcasting ausgestrahlt werden können. Anders als der Stand der Technik ist das erfindungsgemässe Verfahren bezüglich Broadcastanbieter, Mobile Operatoren, Börsenplätze, Banken und Benutzer vollständig offen.

In einer Ausführungsvariante werden bei der Wertschriften-Portfolioverwaltung Verrechnungsdaten zur Verrechnung der mit dem Empfang der Portfolioverwaltungsdaten beanspruchten Leistung an einen oder mehrere Transactionsserver über das Mobilfunknetz übermittelt. Ein Vorteil der Ausführungsvariante ist, dass das Billing resp. die Verrechnung der bezogenen Leistungen über einen Transactionsserver dem Broadcast-Anbieter einfach vergütet werden können. Dies wird erst durch die Kombination des Mobilfunknetzes mit dem Broadcasting möglich. Ganz grundsätzlich gilt es für das erfindungsgemässe Verfahren als Vorteil, dass es für den Bezug der Portfolioverwaltungsdaten durch einen Benutzer kein Abonnement mit einem Broadcastanbieter braucht, sondern die Leistungen spontan bei irgendeinem Broadcastsender genutzt werden können. In einer Erweiterung dieser Ausführungsvariante können die Verrechnungsdaten vom Transactionserver abgerufen werden.

In einer weiteren Ausführungsvariante wird bei der Wertschriften-Portfolioverwaltung für jeden der mindestens einen Broadcastsender auf dem Financialserver ein entsprechendes Broadcastsenderprofil konfiguriert, das festlegt, welche Finanzmärkte und/oder Titelkategorien für den jeweiligen Broadcastsender in den Portfolioverwaltungsdaten berücksichtigt werden sollen. Dies hat den Vorteil, dass die Broadcast-Anbieter bereits beim Bezug der Börsendaten eine genau definierte Leistung beanspruchen können und auch nur entsprechend Gebühren bezahlen müssen. Insbesondere können die Broadcastanbieter den Inhalt der ausgestrahlten Portfolioverwaltungsdaten nach Bedarf ihrer Kunden gruppieren, z.B. nach Land, Branche, Segment (z.B. Index basierend), Optionen, usw.

In einer weiteren Ausführungsvariante werden bei der Wertschriften-Portfolioverwaltung in einem separaten Historymodul chronologische Börsendaten zu jedem berechneten Titel bis zu einem festlegbaren vergangenen Zeitpunkt für den Zugriff mittels einer Empfangsvorrichtung bereitgestellt. Dies hat den Vorteil, dass, falls es dem Benutzer notwendig erscheint, er z.B. zu einer genaueren Analyse beispielsweise auf den genauen Kursverlauf oder andere relevante Börsendaten zu einem bestimmten Titel mit seinem Mobilfunkgerät zugreifen kann, bevor er mit Käufen oder Verkäufen reagiert. Als Erweiterung der Ausführungsvariante kann der Benutzer auf den Financialserver, d.h. z.B. im Historymodul sein eigenes Portfolio konfigurieren und abspeichern. Dies hat den Vorteil, dass seine Portfolioverwaltungsdaten stets auf dem neusten Stand sind und von den mobilen Endgeräten unabhängig.

In einer weiteren Ausführungsvariante werden bei der Wertschriften-Portfolioverwaltung auf verschiedenen Broadcastkanälen (z.B. DAB: Digital Audio Broadcasting / DVB: Digital Video Broadcasting - Kanälen) Börsendaten zu verschiedenen Broadcastsenderprofilen unidirektional und verschlüsselt übertragen und von einer DAB (oder DVB)-mehrkanalfähigen Empfangsvorrichtung empfangen. Dies hat u.a. den Vorteil, dass die beschränkte Bandbreite eines Broadcastkanals erweitert werden können. Insbesondere kann entsprechend den verschiedenen Kanälen verschiedene, spezifische Selektionen an Portfolioverwaltungsdaten angeboten werden, die sich z.B. nach berücksichtigten Finanzplätzen oder Titelkategorien unterscheiden. Die Selektion der entsprechenden Daten kann beispielsweise über EPG (Electronic Programme Guide) oder ein anderes System manuell oder automatisch erfolgen.

In einer Ausführungsvariante werden mittels konfigurierbaren Filtermitteln der Empfangsvorrichtung die für ein spezifisches Portfolio relevanten Portfolioverwaltungsdaten automatisch dem DB-Datenstream (DB: Digital Broadcasting; insbesondere DAB: Digital Audio Broadcasting und DVB: Digital Video Broadcasting) entnommen und angezeigt und/oder abgespeichert. Ein Vorteil dieser Ausführungsvariante ist u.a., dass der Benutzer die Empfangsvorrichtung entsprechend seinem spezifischen Portfolio konfigurieren kann und nur Daten angezeigt bzw. abgespeichert erhält, die für ihn relevant sind. Dem Benutzer kann auch die Möglichkeit gegeben sein, Favoriten zu setzten, damit der Conditional Access Prozess mit dem Zugriff auf die zugriffskontrollierten DAB/DVB-Daten beim Einschalten der Empfangsvorrichtung automatisch mit dem Empfangen beginnt. Die Verrechnung läuft dann z.B. ebenfalls automatisch im Hintergrund.

In einer Ausführungsvariante werden mittels der Empfangsvorrichtung zur Verwaltung des Wertschriften-Portfolios basierend auf den Portfolioverwaltungsdaten über ein Geldinstitut entsprechende Titel gekauft oder verkauft. Diese Ausführungsvariante hat den Vorteil, dass der Benutzer, falls er basierend auf den via Broadcastkanal empfangenen Daten zum Schluss kommt, dass Werte gekauft oder verkauft werden sollten, er über die Empfangsvorrichtung unmittelbar und einfach reagieren kann. Es werden mit der erfindungsgemässen Lösung die ansonsten divergierenden Bereiche Broadcasting, Mobilkommunikation und Banking benutzerfreundlich miteinander verknüpft.

In einer Ausführungsvariante werden entsprechende Portfolioverwaltungs-Applets und/oder URLs (Uniform Resource Locator) oder andere Adressen zum Laden von entsprechenden Portfolioverwaltungs-Applets von der Empfangsvorrichtung direkt aus dem DB-Datenstream des Broadcastsenders entnommen. Dies hat u.a. den Vorteil, dass solche Portfolioverwaltungs-Applets oder URLs als programmbegleitende Daten zusammen mit dem Datenstream des Broadcastsenders beispielsweise unverschlüsselt verbreitet werden können und der Benutzer mit der Empfangsvorrichtung einfach Zugriff auf diese Daten erhält.

In einer anderen Ausführungsvariante werden die Verrechnungsdaten mindestens teilweise periodisch während und/oder nach dem Zugriffs auf die zugriffskontrollierten Portfolioverwaltungsdaten von der Empfangsvorrichtung an den Transactionsserver übermittelt. Diese Ausführungsvariante hat den Vorteil, dass die Verrechnung der vom Benutzer bezogenen Leistung z.B. entsprechend einer bestimmbaren Kreditlimite regelmässig verrechnet werden kann.

In einer anderen Ausführungsvariante wird ein Geldbetragswert in einem Datenspeicher der Empfangsvorrichtung gespeichert, werden in der Empfangsvorrichtung die Kosten basierend auf Kostendaten, welche die Kostenbeträge für den Zugriff auf die zugriffskontrollierten Portfolioverwaltungsdaten pro festgelegte Berechnungseinheit umfassen, bestimmt und die Verrechnungsdaten an den Transactionsserver übermittelt, falls die aufaddierten Kosten für den Zugriff den gespeicherten Geldbetragswert oder ein ganzes Vielfaches davon überschreiten und/oder ein vordefiniertes Zeitfenster abgelaufen ist. Diese Ausführungsvariante hat u.a. die gleichen Vorteile wie die vorhergehende Ausführungsvariante.

In einer wieder anderen Ausführungsvariante wird ein Geldbetragswert in einem Datenspeicher der Empfangsvorrichtung gespeichert, werden in der Empfangsvorrichtung die Kosten basierend auf Kostendaten, welche die Kostenbeträge für den Zugriff auf die zugriffskontrollierten Portfolioverwaltungsdaten pro festgelegte Berechnungseinheit umfassen, bestimmt und die Verrechnungsdaten an den Transactionsserver übermittelt, falls die aufaddierten Kosten für den Zugriff den gespeicherten Geldbetragswert oder ein ganzes Vielfaches davon überschreiten und/oder ein vordefiniertes Zeitfenster abgelaufen ist. Diese Ausführungsvariante hat u.a. die gleichen Vorteile wie die vorhergehende Ausführungsvariante.

In einer Ausführungsvariante wird ein Geldbetragswert in einem Datenspeicher der Empfangsvorrichtung gespeichert, werden in der Empfangsvorrichtung die Kosten basierend auf Kostendaten, welche die Kostenbeträge für den Zugriff auf die zugriffskontrollierten Portfolioverwaltungsdaten pro festgelegte Berechnungseinheit umfassen, bestimmt und die Kosten für den Zugriff vom gespeicherten Geldbetragswert subtrahiert. Der genannte Datenspeicher zur Speicherung des Geldbetragswertes kann z.B. eine entfernbare, wiederaufladbare Chipkarte sein. Die Chipkarte weist z.B. Kreditkarten-Format ISO 7816 oder Plug-In-Format. auf. Diese Ausführungsvariante hat u.a. den Vorteil, dass es das im Mobilfunk übliche Prepaid- oder Postpaid-Verfahren zur Verrechnung der bezogenen Leistung verwendet.

In einer Ausführungsvariante werden Zugriffsbedingungsdaten, welche mindestens die Kostendaten umfassen, den Portfolioverwaltungsdaten zugeordnet unverschlüsselt und unidirektional vom Broadcastsender verbreitet. Dies hat u.a. den Vorteil, dass der Benutzer sich über die anfallenden Kosten für den Bezug von Portfolioverwaltungsdaten, z.B. vor deren Bezug, informieren kann.

In einer Ausführungsvariante umfassen die Zugriffsberechtigungsdaten zusätzlich Zugriffsbedingungsdaten, welche Zugriffsbedingungsdaten mindestens die Kostendaten umfassen. Dies hat u.a. den Vorteil, dass der Broadcast-Anbieter zu der in der vorhergehenden Ausführungsvariante erwähnten Preisvereinbarung, weitere Vereinbarungen bezüglich dem Bezug der Portfolioverwaltungsdaten mit dem Benutzer treffen kann. Diese Vereinbarungen können beispielsweise Weiterverwendungsbedingungen (Copyright etc.) für die Portfolioverwaltungsdaten umfassen.

An dieser Stelle soll festgehalten werden, dass sich die vorliegende Erfindung neben den erfindungsgemässen Verfahren auch auf ein System zur Ausführung dieser Verfahren bezieht.

Nachfolgend werden Ausführungsvarianten der vorliegenden Erfindung anhand von Beispielen beschrieben. Die Beispiele der Ausführungen werden durch folgende beigelegte Figuren illustriert:

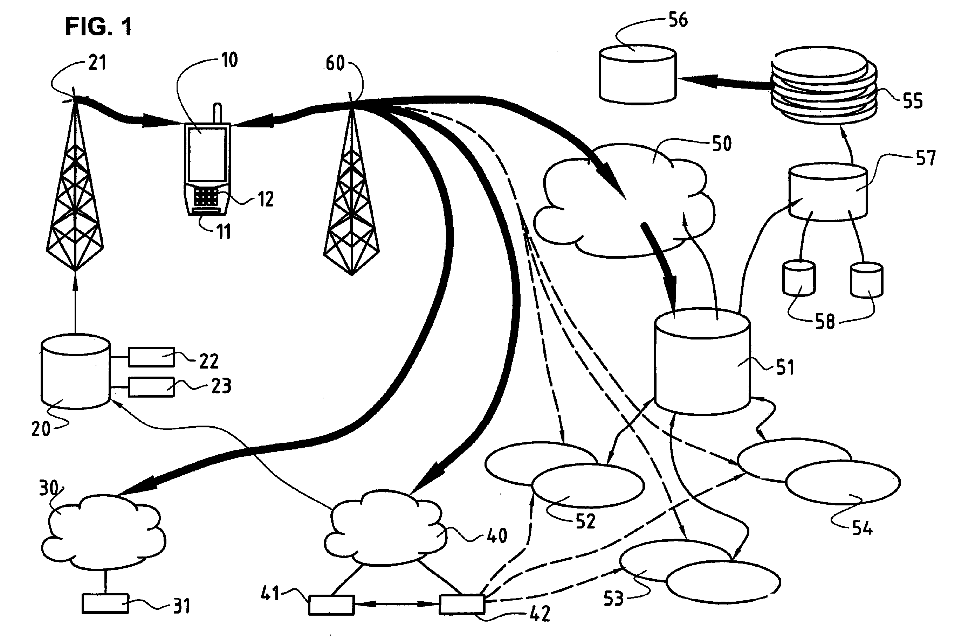

Figur 1 zeigt ein Blockdiagramm, welches schematisch ein System für eine Wertschriften-Portfolioverwaltung illustriert.

Figur 1 illustriert eine Architektur, die zur Realisierung der Erfindung verwendet werden kann. In diesem Ausführungsbeispiel zur Wertschriften-Portfolioverwaltung werden Börsendaten verschiedener Finanzplätze von einem Financialserver 41 erfasst und ausgewertet, wobei Erwartungswerte für zukünftige Kursschwankungen einzelner Titel berechnet werden. Die Börsendaten der Titel, deren berechneter Erwartungswert für zukünftige Kursschwankungen ausserhalb einer festgelegten Schwankungstoleranz liegt, zusammen mit relevanten Daten der Auswertung der Börsendaten des entsprechenden Titels werden zu Portfolioverwaltungsdaten zusammengefasst und über einen ersten Kommunikationskanal 20 an mindestens eine mobile, tragbare Empfangsvorrichtung 10 übermittelt. Dazu werden z.B. die Portfolioverwaltungsdaten an mindestens einen autorisierten Broadcastsender 20 übermittelt. Die Broadcastsender 20 sind erfindungsgemäss Teile von Broadcastsystemen, welche Broadcastsendern und Broadcastempfängern umfassen, in denen digitale Audio-, respektive Video-Programme (Fernsehprogramme), und digitale Daten, beispielsweise Daten für die Ausführung von Datendiensten oder programmbegleitende Daten mit Bezug zu den betreffenden Programmen (Program Associated Data, PAD) oder auch Daten im allgemeinen (Non Program Associated Data, NPAD) von den Broadcastsendern 20 unidirektional verbreitet, beispielsweise mittels von terrestrischen oder satellitenbasierten Sendern ausgestrahlten Radiowellen oder über Broadcastkabelnetze, und von entsprechenden Broadcastempfängern empfangen werden. Erfindungsgemäss umfassen eine Vielzahl von Empfangsvorrichtungen 10 jeweils mindestens einen solchen Broadcastempfänger. Die genannten Broadcastsysteme sind beispielsweise unter der Bezeichnung Digital Audio Broadcasting (DAB), respektive Digital Video Broadcasting (DVB) bekannt. Mit dem Broadcastsender 20 werden auch die Anbieter der mit dem Broadcastsystem verbreiteten Programme und/oder Daten bezeichnet. Der Anbieter kann ebenfalls die verschiedenen Aspekte in ihrer gängigen Unterscheidung umfassen, wie den Broadcast Content Provider (für das Sendeprogramm verantwortlich), den Broadcast Service Provider (Packaging etc.) und den Broadcast Network Provider (Broadcasting, verantwortlich für den Conditional Access etc.). Mit den Programmen und/oder Daten sind beispielsweise digitale Audio- resp. Video-Programme (Fernsehprogramme), und digitale Daten, beispielsweise Daten für die Ausführung von Datendiensten oder programmbegleitende Daten mit Bezug zu den betreffenden Programmen (Program Associated Data, PAD) oder auch Daten im allgemeinen (Non Program Associated Data, NPAD) gemeint. Insbesondere sind damit auch Multimediadaten, z.B. im MPEGx (insbesondere MP2/MPEG7) Standard, wie sie durch die Moving Picture Experts Group definiert werden, gemeint. Zur besseren Klarheit soll hier angefügt werden, dass auch mehrere verschiedene Broadcastanbieter ihre Programme und/oder Daten über einen gemeinsamen Broadcastsender 20 verbreiten können.

Für jeden der Broadcastsender kann z.B. auf dem Financialserver 41 ein entsprechendes Broadcastsenderprofil konfiguriert sein, das festlegt, welche Finanzmärkte und/oder Titelkategorien für den jeweiligen Broadcastsender 20 in den Portfolioverwaltungsdaten berücksichtigt werden. Neben den Portfolioverwaltungsdaten können vom Broadcastsender auch Portfolioverwaltungs-Applets, andere Ausführungssoftware oder URLs (Uniform Resource Locator) oder andere Adressen zum Laden von Portfolioverwaltungs-Applets oder zum Laden anderer Ausführungssoftware übermittelt werden, wobei die Portfolioverwaltungs-Applets zum softwaremässigen Verwalten der Portfolioverwaltungsdaten in der Empfangsvorrichtung 10, insbesondere dem Konfigurieren der Empfangsvorrichtung 10 entsprechend einem spezifischen Wertschriften-Portfolio dienen. Die Portfolioverwaltungsdaten werden verschlüsselt und unidirektional mittels dem ersten Kommunikationskanal 20 ausgestrahlt. Die Portfolioverwaltungs-Applets oder entsprechenden URLs können verschlüsselt oder unverschlüsselt mittels dem ersten Kommunikationskanal 20 ausgestrahlt werden. Wie erwähnt sind die Empfangsvorrichtungen 10 mit einem entsprechenden Empfänger für den ersten Kommunikationskanal 20, wie z.B. einem Broadcastempfänger, ausgestattet, mittels welchem die mittels dem ersten Kommunikationskanal 20 übertragenen Programme und/oder Daten z.B. über Broadcastkanäle empfangen werden können, beispielsweise über das Broadcastkabelnetz oder mittels einer Empfangsantenne als Radiowellen über eine Luftschnittstelle. Es kann insbesondere vorteilhaft sein, wenn die Empfangsvorrichtungen 10 mit einem Broadcastempfänger für Mehrkanalempfang ausgerüstet sind.

Die Empfangsvorrichtungen 10 übermitteln zum Empfangen der zugriffskontrollierten Portfolioverwaltungsdaten Zugriffsrequestdaten an einen Conditionalaccessserver 30 über einen zweiten Kommunikationskanal 60, wie z.B. ein Mobilfunknetz, und der Conditionalaccessserver 30 überträgt Zugriffsberechtigungsdaten basierend auf den Zugriffsrequestdaten an die jeweilige Empfangsvorrichtung 10 über den zweiten Kommunikationskanal 60. Die Zugriffsrequestdaten umfassen z.B. Angaben über den Zugriff auf die gewünschten Portfolioverwaltungsdaten wie z.B. DAB/DVB-Kanal, Broadcast-Anbieter und Bezugsoptionen (Dauer des Zugriffs, maximale Kosten etc.). Die Zugriffsberechtigungsdaten können z.B. Codes für die Entschlüsselung (descrambling) umfassen. Der zweite Kommunikationskanal 60 kann z.B. ein GSM- (Global System for Mobile communication), ein UMTS- (Universal Mobile Telecommunications System) oder ein anderes Mobilfunknetz beispielsweise auch in Kombination mit einem Festnetz, insbesondere das Internet oder ein Intranet, sein. Die Kommunikation über den zweiten Kommunikationskanal 60 erfolgt beispielsweise mittels speziellen Kurzmeldungen, z.B. SMS- (Short Message Services), USSD- (Unstructured Supplementary Services Data) Meldungen oder andere Techniken wie MExE (Mobile Execution Environment), GPRS (Generalized Packet Radio Service), HSCSD-Datendienste (High Speed Circuit Switched Data), WAP (Wireless Applicaton Protocol) oder UMTS (Universal Mobile Telecommunication System) oder über einen Nutzkanal. Die mobile tragbare Empfangsvorrichtung 10 kann z.B. ein Mobilfunkgerät sein und kann basierend auf einem Identifikationsmodul 11 der Empfangsvorrichtung 10 vom Conditionalaccessserver 31 z.B. anhand der Rufnummer (MSISDN: Mobile Subscriber ISDN bzw. IMSI: International Mobile Subscriber Identification) der Empfangsvorrichtung 10 eindeutig identifiziert werden. Das Identifikationsmodul 11 kann, z.B. wie in den Vereinigten Staaten üblich, ein fester Bestandteil des Mobilfunkgerätes 10 sein oder, wie in Europa gebräuchlicher, eine entfernbare Chipkarte wie z.B. eine SIM-Karte (Subscriber Identification Module), WIM-Karte (WAP Identity Module) oder eine UIM (UMTS Identity Module) oder Smart-Card. Die Chipkarte wiest z.B. Kretitkarten-Format ISO 7816 oder Plug-In-Format auf. Die Zuordnung der Rufnummer zum Identifikationsmodul 11 kann z.B. über ein HLR (Home Location Register) erfolgen, indem im HRL die IMSI (International Mobile Subscriber Identification) einer Rufnummer z.B. einer MSISDN (Mobile Subscriber ISDN) zugeordnet abgespeichert ist. Die Identifikation kann z.B. aber auch durch die Eingabe eines PIN (Personal Identity Number) oder über eine biometrische ID erfolgen. Die zugriffskontrollierten Portfolioverwaltungsdaten werden von den Empfangsvorrichtungen 10 empfangen und mittels der Zugriffsberechtigungsdaten entschlüsselt. Dazu umfassen die Empfangsvorrichtungen 10 z.B. verschiedene Filtermittel, die vorzugsweise als programmierte Softwaremodule ausgeführt sind und die so eingerichtet sind, dass sie Portfolioverwaltungsdaten und Portfolioverwaltungs-Applets aus programmbegleitenden Daten (NPAD und/oder PAD), die durch einen Empfänger der Empfangsvorrichtungen 10 empfangen werden, entnehmen und in der Empfangsvorrichtung 10 abspeichern können. Die Filtermittel können zudem in Verbindung mit einem Benutzerprofil ausgeführt sein, in welchem Benutzerprofil benutzerspezifische Interessensparameter gespeichert werden, so dass beispielsweise nur solche Portfolioverwaltungsdaten von der Empfangsvorrichtung 10 entgegengenommen und gespeichert werden, die eine Übereinstimmung mit den im Benutzerprofil gespeicherten Interessensparameter aufweisen. Neben den über den ersten Kommunikationskanal 20 empfangenen Portfolioverwaltungsdaten kann der Benutzer mit seiner Empfangsvorrichtung 10 über den zweiten Kommunikationskanal 60 z.B. auch Zugriff auf ein Historymodul 42 der Finanzdienste 40 erhalten, welches Historymodul 42 detaillierte chronologische Börsendaten zu jedem berechneten Titel über einen festlegbaren Zeitraum umfasst. Die Informationen des Historymoduls 42 können vom Benutzer dazu verwendet werden, sein weiteres strategisches Vorgehen für den Kauf oder Verkauf von Titeln zu bestimmen. In Zusammenhang mit seinem eigenen Wertschriften-Portfolio kann der Benutzer die Möglichkeit besitzen das eigene Portfolio auf seiner Empfangsvorrichtung 10 zu konfigurieren und/oder z.B. ein eigenes Portfolio auf dem Financialserver 41, bzw. im Historymodul 42 zu konfigurieren und abzuspeichern. Der letztere Fall kann deshalb von Vorteil sein, da das Portfolio des Benutzers dann unabhängig von der Empfangsvorrichtung 10 abgespeichert ist, und zudem unabhängig davon, ob die Empfangsvorrichtung 10 an- oder ausgeschaltet ist, stets auf dem aktuellsten Stand ist. Die Auswertung des persönlichen Portfolio des Benutzers kann dann z.B. durch den Financialserver 41 ausgeführt werden.

Zur Realisierung des Conditional Access, d.h. des Zugriffs auf die gewünschten einzelnen oder mehreren zugriffskontrollierten Daten im Broadcast-Datenstream, können z.B. die im ETSI-Standard (European Telecommunications Standards Institute) definierten Mechanismen für zugriffskontrollierte Programme und/oder Daten(-dienste), der sogenannte Conditional Access, verwendet werden. Insbesondere werden im oben genannten ETSI-Standard Scrambling/Descrambling-Prozeduren (Verschlüsselung/Entschlüsselung), Parameter für die Signalisierung und Synchronisation des Conditional Access sowie Mechanismen für die Kontrolle und Verteilung von Berechtigungen (Berechtigungsdaten für Benutzer) durch die Übermittlung von sogenannten ECM-Meldungen (Entitlement Checking Messages) und EMM-Meldungen (Entitlement Management Messages) über die Broadcastkanäle (Broadcastkabelnetz oder Luftschnittstelle) beschrieben. Gemäss dem ETSI-Standard wird für jede der über Broadcastkanäle ausgesandten Dienstkomponenten (bei DAB sind diese Dienstkomponenten Audio-Programme und/oder Daten(-dienste), bei DVB Video-, Fernsehprogrammen, und/oder Daten(-dienste)) ein Conditional Access Flag und/oder ein Conditional Access Identifier benützt, um den Empfangsvorrichtungen 10 anzuzeigen, ob die betreffende Dienstkomponente Conditional Access Mechanismen verwendet oder nicht, und gegebenenfalls, welche Art von Mechanismen verwendet wird. Für Dienstkomponenten, die in einem Controlled Access Modus sind und die in diesem Text als zugriffskontrollierte Programme und/oder Daten bezeichnet werden, werden die Daten der betreffenden Dienstkomponente (die Programme und/oder Daten betreffen kann) mit einem Control Word verschlüsselt, wobei dieses Control Word regelmässig geändert und seinerseits durch einen Session Key (Schlüssel) verschlüsselt in den ECM-Meldungen an die Empfangsvorrichtungen 10 übertragen wird. Durch den Conditional Access Identifier wird ein für alle Dienstkomponenten eines Dienstes verwendetes Zugriffskontrollmodul, das sogenannte Access Control System, identifiziert, welches Access Control System die vom Broadcastsender 20 übermittelten ECM- und EMM-Meldungen interpretieren und verarbeiten kann. Der für die Verschlüsselung der Control Words verwendete Session Key (Schlüssel) ist gemäss dem ETSI-Standard im Access Control System als geheime Information gespeichert. Session Keys (Schlüssel) können in EMM-Meldungen an die Empfangsvorrichtungen 10 übertragen werden, wobei sie für die Übertragung ihrerseits durch einen Distribution Key verschlüsselt sind. Gemäss dem ETSI-Standard werden in den EMM-Meldungen Berechtigungen (Berechtigungsdaten) an die Empfangsvorrichtungen 10 übertragen, wobei verschiedene Arten von Berechtigungen definiert sind, die verschiedenen Abonnementsarten entsprechen: Abonnemente für ein Thema, eine Stufe oder eine Klasse, Vorbuchung mit Bezahlung pro Programm, oder spontane Bezahlung pro Programm, pro Dienst oder pro Zeit. Gemäss den oben genannten ETSI-Standards können die EMM-Meldungen an einen spezifischen, durch eine eindeutige Kundenadresse identifizierten Kunden (Benutzer), an eine kleine, durch eine Gruppenadresse identifizierte Gruppe von Kunden (Benutzern), an eine grosse, durch eine Kollektivadresse identifizierte Gruppe von Kunden (Benutzern) oder an sämtliche Kunden übermittelt werden. Da der Inhalt der EMM-Meldungen, insbesondere die Berechtigungen, nicht in Echtzeit an die Empfangsvorrichtungen 10 übermittelt werden muss, kann dieser anstatt mittels EMM-Meldungen auch auf anderem Weg, beispielsweise gespeichert auf einem Datenträger, insbesondere einer Chipkarte, an die Empfangsvorrichtungen 10 übertragen werden. Gemäss dem ETSI-Standard sind die Kundenadressen im Access Control System (Zugriffskontrollmodul) gespeichert und werden vom Access Control System an das für den Empfang von EMM-Meldungen zuständige EMM-Empfangsmodul der Empfangsvorrichtungen 10 übertragen, so dass dieses EMM-Empfangsmodul nur solche EMM-Meldungen an das Access Control System weiterleitet, die eine Kundenadresse enthalten, die mit einer der vom Access Control System erhaltenen Kundenadressen übereinstimmen. Um das Access Control System nicht unnötig mit Meldungen zu überlasten, können die Empfangsvorrichtungen 10 Hard- oder Softwarefilter umfassen, die nur diejenigen Meldungen an das Access Control System weiterleiten, die durch das Access Control System interpretiert und verarbeitet werden können und müssen, beispielsweise werden die Meldungen, wie obenstehend erwähnt, auf Grund der Kundenadresse gefiltert und es werden wiederholt übertragene Meldungen gefiltert. In einer Ausführungsvariante kann folglich ein ECM-/EMM-Mechanismus vorgesehen sein, der die Benutzeridentifikation via IMSL/MSISDN oder ähnlichen Identifikationsmitteln vom Mobilfunksystem verwendet, um die Conditional Access-Verrechnung derart zu ermöglichen, dass keine Abonnemente zwischen Broadcastanbietern und Benutzern notwendig sind. Damit wird ein Roaming zwischen Broadcastanbietern und Benutzern ermöglicht, wobei die Abrechnung via Mobilabrechnung erfolgt.

Die mit dem Empfang der Portfolioverwaltungsdaten beanspruchten Leistungen können z.B. mittels an einen Transactionsserver 51 mittels dem zweiten Kommunikationskanal 60 übermittelten Verrechnungsdaten verrechnet werden. Die Leistungen können aber auch beispielsweise über wiederaufladbare (anonymen) Chipkarten, die in eine von möglicherweise mehreren Karteneinführstellen der Empfangsvorrichtung 10 eingeführt werden, verbucht werden, wobei ein entsprechender Geldbetragswert vom dort gespeicherten Geldbetragswert subtrahiert oder zu diesem addiert wird. Der Conditionalaccessserver 31, der Financialserver 41, sowie der Transactionserver 51 umfassen jeweils mehrere Softwaremodule und sind auf einem gemeinsamen oder mehreren Computern ausgeführt. Sind zwei oder alle drei der Server 31/41/41 auf einem gemeinsamen Computer ausgeführt, so erfolgt der Datenaustausch zwischen jeweils zwei der Server 31/41/51 beispielsweise über eine Softwareschnittstelle. Wenn zwei der Server 31/41/51 auf verschiedenen Computern ausgeführt sind, erfolgt der Datenaustausch zwischen diesen Servern z.B. über ein Kommunikationsnetz, beispielsweise ein Festnetz, wie z.B. das öffentlich geschaltete Telefonnetz (PSTN: Public Switched Telephone Network), ein ISDN-Netz (Integrated Services Digital Network) oder eine andere Kommunikationsverbindung. Entsprechende Kommunikationsfunktionen sind in den Servern 31/41/51 in Kommunikationmodulen realisiert, wobei diese Module softwaremässig realisierte Kommunikationsprotokolle und/oder Hardwarekomponenten für die Kommunikation über das betreffende Kommunikationsnetz umfassen. Die Kommunikationsmodule des Financialservers 41 umfassen zudem die erforderlichen softwaremässig realisierten Kommunikationsprotokolle und/oder Hardwarekomponenten für die Kommunikation mit dem Broadcastsender 20 über eine Kommunikationsverbindung, z.B. das oben erwähnte Kommunikationsnetz, wie beispielsweise ein Festnetz etc., wobei der Broadcastsender 20 seinerseits mit entsprechenden Kommunikationsmodulen ausgestattet ist.

Wird für den ersten Kommunikationskanal 20 ein Broadcastsender verwendet, kann der Broadcastsender 20 eine Sendeanlage 22, die Radio-(Audio-) und/oder Fernsehprogramme (audiovisuelle Programme) und programmbegleitende Daten, beispielsweise NPAD- (Non Program Associated Data) oder PAD-Daten (Program Associated Data) generieren und über die Antenne 21 verbreiten kann. Die Sendeanlage 22 umfasst neben der Signalerzeugungselektronik und den Leistungsverstärkern auch einen oder mehrere Computer und mehrere programmierte Softwaremodule. Der Broadcastsender 20, respektive die Sendeanlage 22, ist beispielsweise für die Generierung von DAB- (Digital Audio Broadcasting) und/oder DVB-Programmen (Digital Video Broadcasting) ausgelegt. Normen für ein DAB-System, das für die Übermittlung von hochqualitativen digitalen Audio-Programmen und/oder Datendiensten für den Empfang mittels mobilen, tragbaren und festinstallierten Empfängern von terrestrischen oder satellitenbasierten Sendern 20 oder von Broadcastkabelnetzen entwickelt wurde, wurden beispielsweise vom European Telecommunications Standards Institute (ETSI), F-06921 Sophia Antipolis Cedex, France, im Standard ETS 300 401, "Radio broadcasting systems; Digital Audio Broadcasting (DAB) to mobile, portable and fixed receivers", definiert. Der Broadcastsender 20 kann zudem alle Infrastrukturteile eines modernen digitalen Broadcastsystems, wie beispielsweise die technischen Komponenten zur Inhaltserfassung und -aufbereitung (Content Provider), die technischen Komponenten zur Generierung und Bereitstellung der Rundfunkdienstleitung (Service Provider), die technischen Komponenten für die Netzwerkdienste (Network Provider) oder die technischen Komponenten der Multiplex- und Schaltdiensten (MUX-Provider). Der Broadcastsender 20, respektive die Sendeanlage 22, umfasst Einfügemittel 23, die vorzugsweise als programmiertes Softwaremodul ausgeführt sind und die so eingerichtet sind, dass sie Börsendaten bzw. Portfolioverwaltungsdaten, die vom Financialserver 41 übermittelt wurden, in programmbegleitende Daten (PAD und/oder NPAD) einfügen können, um sie für die Empfangsvorrichtungen 10 empfangbar über die Antenne 21 mittels Funksignalen zu verbreiten. Die Einfügemittel 23 werden vom Broadcastsender 20 insbesondere dazu verwendet, um Portfolioverwaltungsdaten und Portfolioverwaltungs-Applets und/oder andere Ausführungssoftware und/oder URLs zum Landen von Ausführungssoftware und/oder andere Adressen zum Landen von Ausführungssoftware vom Financialserver 41 an die Empfangsvorrichtungen 10 zu übermitteln.

Die vom Broadcastsender 20 verbreiteten Radio- und/oder Fernsehprogramme, respektive Audio- und/oder audiovisuelle Programme (Videoprogramme), und programmbegleitenden Daten (PAD und/oder NPAD) können von den Empfangsvorrichtungen 10 jeweils mittels eines Empfängers für Radiound/oder Fernsehprogramme, respektive Audio- und/oder audiovisuelle Programme (Videoprogramme), und programmbegleitende Daten (PAD und/oder NPAD) empfangen werden. Die Empfangsvorrichtungen 10, respektive deren Empfänger, umfassen zudem (zum Teil bereits weiter oben beschriebene) Zugriffskontrollmodule, die den Zugriff auf zugriffskontrollierte und/oder kostenpflichtige Radio- und/oder Fernsehprogramme, respektive Audio- und/oder audiovisuelle Programme (Videoprogramme), und programmbegleitende Daten (PAD und/oder NPAD) regeln und Mechanismen für die Handhabung von Berechtigungen (Entitlements) sowie die Entschlüsselung (Descrambling) von sogenannten Conditional Access Radio- und/oder Fernsehprogrammen, respektive Audio- und/oder audiovisuelle Programme (Videoprogramme), und programmbegleitenden Daten (PAD und/oder NPAD) umfassen.

Die Verrechnungsdaten werden z.B. mindestens teilweise periodisch während und/oder nach dem Zugriffs auf die zugriffskontrollierten Portfolioverwaltungsdaten von der Empfangsvorrichtung 10 an den Transactionsserver 51 übermittelt, der die weitere Verrechnung der Kosten übernimmt, d.h. z.B. die Kosten mittels eines Verrechnungsmodul 57 auf einem oder mehreren Konto bei einem Finanzinstitut 56 entsprechend den Kosten für die bezogenen Leistungen belastet bzw. den mobilen Operatoren 58 verrechnet wird. Beispielsweise kann ein Geldbetragswert in einem Datenspeicher der Empfangsvorrichtung 10 gespeichert werden und die Kosten basierend auf Kostendaten, welche die Kostenbeträge für den Zugriff auf die zugriffskontrollierten Portfolioverwaltungsdaten pro festgelegter Berechnungseinheit umfassen, in der Empfangsvorrichtung mittels eines Kostenerfassungsmoduls bestimmt werden. Das Kostenerfassungsmodul ist beispielsweise ein programmiertes Softwaremodul, das auf einem Prozessor der Empfangsvorrichtung 10 oder einer Chipkarte ausgeführt wird, oder ein hardwaremässig realisiertes Modul. Bei der Ausführungsvariante mit der Chipkarte kann die Chipkarte z.B. eine multifunktionale SIM-Karte unter Berücksichtigung der MexE-Spezifikationen (Mobile Station Application Execution Environment) sein. Die Verrechnungsdaten werden z.B. an den Transactionsserver übermittelt, wenn die aufaddierten Kosten für den Zugriff den gespeicherten Geldbetragswert oder ein ganzes Vielfaches davon überschreiten und/oder ein vordefiniertes Zeitfenster abgelaufen ist. In einer Ausführungsvariante können die mittels des Kostenerfassungsmodul berechneten Kosten für den Zugriff auch vom gespeicherten Geldbetragswert subtrahiert werden. Dies eignet sich insbesondere für Prepaid- oder Postpaidverfahren zur Verrechnung der durch den Benutzer beanspruchten Leistungen. Der genannte Datenspeicher zur Speicherung des Geldbetragswertes kann beispielsweise eine entfernbare, wiederaufladbare Chipkarte sein. Die Chipkarte kann zum Beispiel auch eine generische Chipkarte für Zahlungstransaktionen oder eine spezifische Chipkarte sein, wobei letztere beispielsweise als sogenanntes "Electronic Wallet" ausgeführt ist, und die beispielsweise für diesen Zweck über eine zweite Chipkarten-Aufnahmestelle mit der Empfangsvorrichtung 10 entfernbar verbunden ist. Vorzugsweise kommt dabei die SIM-Karte, die für die Mobilen Services verwendet wird, zur Anwendung. Die an den Transactionserver 51 übermittelten Verrechnungsdaten können insbesondere Verrechnungsbelege (z.B. elektronisch signiert) umfassen, ähnlich wie CDR-Belege (Call Data Records) als sogenannte DUR-Belege (DAB/DVB Usage Records). Wie erwähnt dient das Kostenerfassungsmodul zur Bestimmung der Kosten, die einem betreffenden Benutzer für den Bezug der kostenpflichtigen Portfolioverwaltungsdaten entstehen. Das Kostenerfassungsmodul bestimmt die Kosten basierend auf Kostendaten, welche z.B. die Kostenbeträge für den Zugriff auf die zugriffskontrollierten Portfolioverwaltungsdaten pro festgelegte Berechnungseinheit umfassen. Die Kostendaten werden z.B. als ein Teil von Zugriffsbedingungsdaten unverschlüsselt und unidirektional vom Broadcastsender 20 ausgestrahlt, d.h. die Zugriffsbedingungsdaten sind jeweils einem betreffenden Radio- oder Fernsehprogramm oder programmbegleitenden Daten (PAD und/oder NPAD) zugeordnet und werden durch die Empfangsvorrichtung 10 empfangen. Die Zugriffsbedingungsdaten können aber auch den Zugriffsberechtigungsdaten zugeordnet sein und vom Conditionalaccessserver 31 an die Empfangsvorrichtung 10 übermittelt werden. Neben den Kostendaten können die Zugriffsbedingungsdaten weitere Konditionen für den Zugriff auf die Portfolioverwaltungsdaten umfassen, wie z.B. AGB (Allgemeine Geschäftsbedingungen), Weiterverwendungsbedingungen (Copyright, Discountraten, Qualifying Data) etc., welchen der Benutzer beispielsweise vor einem Zugriff zuzustimmen hat. Die direkte Belastung der Kosten in der Empfangsvorrichtung 10 kann beispielsweise dann vorgenommen werden, wenn vom Teilnehmer in der Empfangsvorrichtung 10 eine entsprechende Option gesetzt wird. Die Funktion des Kostenerfassungsmoduls kann mit dem oben erwähnten Zugriffskontrollmodul gekoppelt sein, so dass der Bezug und/oder die Ausführung von Portfolioverwaltungsdaten und/oder Portfolioverwaltungs-Applets nur unter der Bedingung ermöglicht wird, dass die bestimmten Kosten z.B. der erwähnte in der Empfangsvorrichtung 10 gespeicherte Geldbetragswert, beispielsweise auf der entfernbaren mit der Empfangsvorrichtung 10 verbundenen Chipkarte nicht übersteigen. In der oben erwähnten Aufnahmestelle für die entfernbare Verbindung von Chipkarten mit der Empfangsvorrichtung kann auch eine Kreditkarte eingeführt werden, deren Validität beispielsweise online überprüft werden kann, welche Kreditkarte Angaben über ein Konto bei einem Finanzinstitut umfasst, auf das die Kosten für die bezogenen Leistungen belastet werden sollen, wobei diese Angaben beispielsweise in die Kostenbelege eingeführt werden können.

Die Empfangsvorrichtungen 10 verfügen vorzugsweise über elektroakustische Wiedergabe- und Aufnahmemodule, einerseits um empfangene Radioprogramme, respektive Audioprogramme, über Lautsprecher oder Kopfhörer wiedergeben zu können, und andererseits um die Empfangsvorrichtungen 10 als voll funktionstaugliches Mobilfunktelefon verwenden zu können. Die Empfangsvorrichtungen 10 verfügen zudem über Eingabeelemente 12, welche insbesondere Bedienungselemente wie Eingabetasten und/oder Touchscreen etc. umfassen, und eine Anzeige, einerseits, um Daten und Instruktionen einzugeben und anzuzeigen, andererseits um die Empfangsvorrichtung 10 zu bedienen und als spezielles Ausführungsbeispiel empfangene Fernsehprogramme, respektive audiovisuelle Programme oder Videoprogramme, und Daten anzuzeigen. Die Eingabeelemente 12 können insbesondere auch ein Spracherkennungsmodul umfassen.

Die Portfolioverwaltungs-Applets werden, beispielsweise nach vorgängiger Bestätigung durch den betreffenden Benutzer, auf einem Prozessor der Empfangsvorrichtung 10 ausgeführt. Die Portfolioverwaltungs-Applets sind vorzugsweise in einer portablen Programmiersprache ausgeführt, beispielsweise in Java der Firma Sun Microsystems oder einer ähnlichen Programmiersprache, die es ermöglicht, Portfolioverwaltungs-Applets hardwareunabhängig z.B. auf einer virtuellen Plattform der Empfangsvorrichtung 10 auszuführen. Die Portfolioverwaltungs-Applets, die in den Empfangsvorrichtungen ausgeführt werden, können insbesondere als Benutzerschnittstelle zum Verwalten der Portfolioverwaltungsdaten dienen. Die Benutzerschnittstelle kann textuell oder grafisch gestaltet sein, beispielsweise Tabellenform als grafische Benutzerschnittstelle auf der Anzeige der Empfangsvorrichtung 10 dargestellt werden und es können herkömmliche Funktionen wie Hilfedienste oder Filedienste, respektive Speicherdienst, in die Benutzerschnittstelle eingebaut sein. Über die durch die Portfolioverwaltungs-Applets dargestellte Benutzerschnittstelle werden vom betreffenden Benutzer mittels der oben erwähnten Eingabeelemente 12 Instruktionen eingegeben. Die Instruktionen können insbesondere den Auftrag an ein Geldinstitut zum Kaufen oder Verkaufen von Wertschriften oder Titel umfassen. Die Aufträge zum Kaufen oder Verkaufen von Wertschriften oder Titel können z.B. direkt an ein oder mehrere Finanzinstitute 52/53/54 über den ersten Kommunikationskanal 60 gehen, über den Transactionserver 51 an ein oder mehrere Finanzinstitute 52/53/54 oder die persönliche Portfolioverwaltung im Historymodul 42 an ein oder mehrere Finanzinstitute 52/53/54.

Es ist zu erwähnen, dass die verschiedenen Module und Komponenten der Empfangsvorrichtung 10, insbesondere der Empfänger für die Radio- und/oder Fernsehprogramme (Audio- und/oder audiovisuelle Programme) und programmbegleitenden Daten (PAD und/oder NPAD) und das Kommunikationsmodul für die Kommunikation über das Mobilfunknetz, vorzugsweise in einem gemeinsamen Gehäuse ausgeführt werden. Es sind aber auch Ausführungsformen möglich, in denen einzelne Module und Komponenten in separaten, miteinander verbindbaren Gehäusen ausgeführt sind. Die Komponenten der oben beschriebenen Empfangsvorrichtungen 10 können auch mit sogenannten Laptop-, Palmtop-Computern oder PDAs (Personal Digital Assistant) als verbindbare Komponenten oder in einem gemeinsamen Gehäuse ausgeführt werden. Rein äusserlich betrachtet können die Empfangsvorrichtungen 10 also wie herkömmliche Mobilfunktelefone, Radio- und/oder Fernsehempfänger, Palmtop-Computer, Laptop-Computer oder PDAs aussehen. Asl letztes ist anzufügen, dass das hier vorgestellte Verfahren und System zwar in erster Linie für Broadcastsysteme wie DAB und/oder DVB gedacht ist, aber auch für alle anderen Einwegsysteme und internetähnlichen Systeme Geltung hat.

## Patentansprüche

1. Computergestütztes Wertschriften-Portfolioverwaltungsystem, welches mindestens einen Financialserver (41) mit Mitteln zum Erfassen und Auswerten von Börsendaten verschiedener Finanzplätze umfasst, bei welcher Auswertung Erwartungswerte für zukünftige Kursschwankungen einzelner Titel berechnet werden, **dadurch gekennzeichnet,**
**dass** der Financialserver (41) ein Filtermodul zum Filtern der Börsendaten nach denjenigen Titeln umfasst, deren berechneter Erwartungswert ausserhalb einer festlegbaren Schwankungstoleranz liegt, wobei gefilterte Titel mittels des Filtermoduls mit relevanten Daten der Auswertung der Börsendaten zu Portfolioverwaltungsdaten zusammenfassbar sind,
**dass** das Wertschriften-Portfolioverwaltungsystem einen ersten Kommunikationskanal (20) zum zugriffskontrollierten und unidirektionalen Übertragen der Portfolioverwaltungsdaten des Financialservers (41) auf mindestens eine tragbare, mobile Empfangsvorrichtungen (10) umfasst,
**dass** das Wertschriften-Portfolioverwaltungsystem einen zweiten Kommunikationskanal (60) zum Übertragen von Zugriffsrequestdaten von einer Empfangsvorrichtung (10) an einen Conditionalaccessserver (31) und zum Übertragen von Zugriffsberechtigungsdaten basierend auf den Zugriffsrequestdaten vom Conditionalaccessserver (31) an die entsprechende Empfangsvorrichtung (10) umfasst, wobei den Zugriffsrequestdaten eine auf einer Identifizierungskarte der mobilen Empfangsvorrichtung (10) gespeicherten Identifizierung zugeordnet ist, und
**dass** die mindestens eine Empfangsvorrichtung (10) jeweils Filtermittel zum Empfangen und mittels der Zugriffsberechtigungsdaten zum Entschlüsseln der zugriffskontrollierten Portfolioverwaltungsdaten umfasst.

2. Computergestütztes Wertschriften-Portfolioverwaltungsystem nach Anspruch 1, **dadurch gekennzeichnet, dass** der erste Kommunikationskanal (20) mindestens einen Broadcastsender umfasst, mittels welchem die Portfolioverwaltungsdaten verschlüsselt und unidirektional verbreitet werden.

3. Computergestütztes Wertschriften-Portfolioverwaltungsystem nach Anspruch 2, **dadurch gekennzeichnet, dass** der Financialserver (41) für verschiedene Broadcastsender (20) unterschiedliche Broadcastsenderprofile umfasst, die festlegen, welche Finanzmärkte und/oder Titelkategorien für den jeweiligen Broadcastsender (20) in den Portfolioverwaltungsdaten berücksichtigt werden.

4. Computergestütztes Wertschriften-Portfolioverwaltungsystem nach einem der Ansprüche 1 bis 3, **dadurch gekennzeichnet, dass** der zweite Kommunikationskanal (60) ein Mobilfunknetz, insbesondere ein GSM- und/oder ein UMTS-Mobilfunknetz umfasst.

5. Computergestütztes Wertschriften-Portfolioverwaltungsystem nach einem der Ansprüche 1 bis 4, **dadurch gekennzeichnet, dass** das Wertschriften-Portfolioverwaltungsystem einen Transactionsserver (51) zur Verrechnung von über den zweiten Kommunikationskanal (60) empfangenen Verrechnungsdaten umfasst, wobei die Verrechnungsdaten Informationen zur mit dem Empfang der Portfolioverwaltungsdaten beanspruchten Leistung umfassen.

6. Computergestütztes Wertschriften-Portfolioverwaltungsystem nach einem der Ansprüche 1 bis 5, **dadurch gekennzeichnet, dass** das Wertschriften-Portfolioverwaltungsystem ein Historymodul (42) mit Börsendaten umfasst, welches zu jedem berechneten Titel die Börsendaten bis zu einem festlegbaren vergangenen Zeitpunkt umfasst und auf welchem Börsendaten über den zweiten Kommunikationskanal (60) mittels der mindestens einen Empfangsvorrichtung (10) zugreifbar sind.

7. Computergestütztes Wertschriften-Portfolioverwaltungsystem nach einem der Ansprüche 1 bis 6, **dadurch gekennzeichnet, dass** die mindestens eine Empfangsvorrichtung (10) Empfangsmittel zum Empfang mehrerer DB-Kanäle umfasst.

8. Computergestütztes Wertschriften-Portfolioverwaltungsystem nach einem der Ansprüche 1 bis 7, **dadurch gekennzeichnet, dass** die mindestens eine Empfangsvorrichtung (10) konfigurierbare Filtermittel zum Entnehmen von für ein spezifisches Portfolio relevante Portfolioverwaltungsdaten aus dem DB-Datenstream und/oder zum Anzeigen und/oder Abspeichern von für ein spezifisches Portfolio relevante Portfolioverwaltungsdaten umfasst.

9. Computergestütztes Wertschriften-Portfolioverwaltungsystem nach einem der Ansprüche 1 bis 8, **dadurch gekennzeichnet, dass** mittels der mindestens einen Empfangsvorrichtung (10) beim Verwalten des Wertschriften-Portfolios basierend auf den Portfolioverwaltungsdaten über ein Geldinstitut entsprechende Titel kaufbar oder verkaufbar sind.

10. Computergestütztes Wertschriften-Portfolioverwaltungsystem nach einem der Ansprüche 1 bis 9, **dadurch gekennzeichnet, dass** die mindestens eine Empfangsvorrichtung (10) Filtermittel zum Entnehmen von der Portfolioverwaltung entsprechenden Portfolioverwaltungs-Applets und/oder URLs oder andere Adressen zum Laden von entsprechenden Portfolioverwaltungs-Applets aus dem DB-Datenstream des Broadcastsenders (20) umfasst.

11. Computergestütztes Wertschriften-Portfolioverwaltungsystem nach einem der Ansprüche 1 bis 10, **dadurch gekennzeichnet, dass** die mindestens eine Empfangsvorrichtung (10) jeweils ein Kostenerfassungsmodul umfasst, mittels welchem die Verrechnungsdaten mindestens teilweise periodisch während und/oder nach dem Zugriff auf die zugriffskontrollierten Portfolioverwaltungsdaten von der Empfangsvorrichtung (10) an den Transactionsserver (51) übermittelbar sind.

12. Computergestütztes Wertschriften-Portfolioverwaltungsystem nach einem der Ansprüche 1 bis 11, **dadurch gekennzeichnet, dass** die mindestens eine Empfangsvorrichtung (10) jeweils einen Datenspeicher zum Speichern eines Geldbetragswertes sowie ein Kostenerfassungsmodul zum Berechnen der Kosten basierend auf Kostendaten, welche die Kostenbeträge für den Zugriff auf die zugriffskontrollierten Portfolioverwaltungsdaten pro festgelegte Berechnungseinheit umfassen, und zum Übermitteln von Verrechnungsdaten an den Transactionsserver (51), falls die aufaddierten Kosten für den Zugriff den gespeicherten Geldbetragswert oder ein ganzes Vielfaches davon überschreiten und/oder ein vordefiniertes Zeitfenster abgelaufen ist, umfasst.

13. Computergestütztes Wertschriften-Portfolioverwaltungsystem nach einem der Ansprüche 1 bis 12, **dadurch gekennzeichnet, dass** die mindestens eine Empfangsvorrichtung (10) jeweils einen Datenspeicher zum Speichern eines Geldbetragswertes sowie ein Kostenerfassungsmodul zum Berechnen der Kosten basierend auf Kostendaten, welche die Kostenbeträge für den Zugriff auf die zugriffskontrollierten Portfolioverwaltungsdaten pro festgelegte Berechnungseinheit umfasst, und zum Subtrahieren der Kosten für den Zugriff vom gespeicherten Geldbetragswert umfasst.

14. Computergestütztes Wertschriften-Portfolioverwaltungsystem nach Anspruch 13, **dadurch gekennzeichnet, dass** der genannte Datenspeicher zur Speicherung des Geldbetragswertes eine entfernbare, wiederaufladbare Chipkarte ist.

15. Computergestütztes Wertschriften-Portfolioverwaltungsystem nach einem der Ansprüche 1 bis 14, **dadurch gekennzeichnet, dass** Zugriffsbedingungsdaten, welche mindestens Kostendaten umfassen, den Portfolioverwaltungsdaten unverschlüsselt und unidirektional über den ersten Kommunikationskanal (20) zugeordnet sind.

16. Computergestütztes Wertschriften-Portfolioverwaltungsystem nach einem der Ansprüche 1 bis 15, **dadurch gekennzeichnet, dass** die Zugriffsberechtigungsdaten zusätzlich Zugriffsbedingungsdaten umfassen, welche Zugriffsbedingungsdaten mindestens Kostendaten umfassen.

17. Computergestütztes Wertschriften-Portfolioverwaltungsverfahren, bei welchem Börsendaten verschiedener Finanzplätze von einem Financialserver (41) erfasst und ausgewertet werden, wobei Erwartungswerte für zukünftige Kursschwankungen einzelner Titel berechnet werden, **dadurch gekennzeichnet,**
**dass** die Börsendaten der Titel, deren berechneter Erwartungswert für zukünftige Kursschwankungen ausserhalb einer festgelegten Schwankungstoleranz liegt, zusammen mit relevanten Daten der Auswertung der Börsendaten des entsprechenden Titels zu Portfolioverwaltungsdaten zusammengefasst werden,
**dass** die Portfolioverwaltungsdaten über einen ersten Kommunikationskanal (20) zugriffskontrolliert und unidirektional übermittelt werden und von mindestens einer tragbaren, mobilen Empfangsvorrichtung (10) eines Kunden empfangen werden,
**dass** Zugriffsrequestdaten einer auf einer Identifizierungskarte einer tragbaren, mobilen Empfangsvorrichtung (10) gespeicherten Identifizierung zugeordnet über einen zweiten Kommunikationskanal (60) an einen Conditionalaccessserver (31) übertragen werden, und
**dass** Zugriffsberechtigungsdaten basierend auf den Zugriffsrequestdaten vom Conditionalaccessserver (31) an die entsprechende Empfangsvorrichtung (10) übertragen werden, mittels welchen Zugriffsberechtigungsdaten die zugriffskontrollierten Portfolioverwaltungsdaten von der Empfangsvorrichtung (10) entschlüsselt werden.

18. Computergestütztes Wertschriften-Portfolioverwaltungsystem nach Anspruch 17, **dadurch gekennzeichnet, dass** die Portfolioverwaltungsdaten verschlüsselt und unidirektional mittels mindestens einem Broadcastsender (20) verbreitet werden.

19. Computergestütztes Wertschriften-Portfolioverwaltungsystem nach Anspruch 18, **dadurch gekennzeichnet, dass** für jeden der mindestens einen Broadcastsender (20) auf dem Financialserver (41) ein entsprechendes Broadcastsenderprofil konfiguriert wird, das festlegt, welche Finanzmärkte und/oder Titelkategorien für den jeweiligen Broadcastsender (20) in den Portfolioverwaltungsdaten berücksichtigt werden.

20. Computergestütztes Wertschriften-Portfolioverwaltungsystem nach einem der Ansprüche 17 bis 19, **dadurch gekennzeichnet, dass** als zweiter Kommunikationskanal (60) ein Mobilfunknetz, insbesondere ein GSMund/oder ein UMTS-Mobilfunknetz verwendet wird.

21. Computergestütztes Wertschriften-Portfolioverwaltungsystem nach einem der Ansprüche 17 bis 20, **dadurch gekennzeichnet, dass** Verrechnungsdaten zur Verrechnung der mit dem Empfang der Portfolioverwaltungsdaten beanspruchten Leistung an einen Transactionsserver (51) über den zweiten Kommunikationskanal (60) übermittelt werden.

22. Computergestütztes Wertschriften-Portfolioverwaltungsystem nach einem der Ansprüche 17 bis 21, **dadurch gekennzeichnet, dass** in einem separaten Historymodul (42) chronologische Börsendaten zu jedem berechneten Titel bis zu einem festlegbaren vergangenen Zeitpunkt für den Zugriff mittels der Empfangsvorrichtung (10) bereitgestellt werden.

23. Computergestütztes Wertschriften-Portfolioverwaltungsystem nach einem der Ansprüche 17 bis 22, **dadurch gekennzeichnet, dass** auf verschiedenen DAB-/DVB-Kanälen Börsendaten zu verschiedenen Broadcastsenderprofilen unidirektional und verschlüsselt übertragen werden und von einer DAB-/DVB-mehrkanalfähigen Empfangsvorrichtung (10) empfangen werden.

24. Computergestütztes Wertschriften-Portfolioverwaltungsystem nach einem der Ansprüche 17 bis 23, **dadurch gekennzeichnet, dass** mittels konfigurierbarer Filtermittel der mindestens einen Empfangsvorrichtung (10) die für ein spezifisches Portfolio relevanten Portfolioverwaltungsdaten automatisch dem DAB-/DVB-Datenstream entnommen und angezeigt und/oder abgespeichert werden.

25. Computergestütztes Wertschriften-Portfolioverwaltungsystem nach einem der Ansprüche 17 bis 24, **dadurch gekennzeichnet, dass** mittels der mindestens einen Empfangsvorrichtung (10) beim Verwalten des Wertschriften-Portfolios basierend auf den Portfolioverwaltungsdaten über ein Geldinstitut (52/ 53/ 54) entsprechende Titel gekauft oder verkauft werden.

26. Computergestütztes Wertschriften-Portfolioverwaltungsystem nach einem der Ansprüche 17 bis 25, **dadurch gekennzeichnet, dass** entsprechende Portfolioverwaltungs-Applets und/oder URLs oder andere Adressen zum Laden von entsprechenden Portfolioverwaltungs-Applets von der Empfangsvorrichtung (10) direkt aus einem DB-Datenstream des ersten Kommunikationskanals (20) entnommen werden.

27. Computergestütztes Wertschriften-Portfolioverwaltungsystem nach einem der Ansprüche 17 bis 26, **dadurch gekennzeichnet, dass** die Verrechnungsdaten mindestens teilweise periodisch während und/oder nach dem Zugriff auf die zugriffskontrollierten Portfolioverwaltungsdaten von der mindestens einen Empfangsvorrichtung (10) an den Transactionsserver (51) übermittelt werden.

28. Computergestütztes Wertschriften-Portfolioverwaltungsystem nach einem der Ansprüche 17 bis 27, **dadurch gekennzeichnet, dass** ein Geldbetragswert in einem Datenspeicher der mindestens einen Empfangsvorrichtung (10) gespeichert wird, in der Empfangsvorrichtung die Kosten basierend auf Kostendaten, welche die Kostenbeträge für den Zugriff auf die zugriffskontrollierten Portfolioverwaltungsdaten pro festgelegte Berechnungseinheit umfassen, bestimmt werden und die Verrechnungsdaten an den Transactionsserver (51) übermittelt werden, falls die aufaddierten Kosten für den Zugriff den gespeicherten Geldbetragswert oder ein ganzes Vielfaches davon überschreiten und/oder ein vordefiniertes Zeitfenster abgelaufen ist.

29. Computergestütztes Wertschriften-Portfolioverwaltungsystem nach einem der Ansprüche 17 bis 28, **dadurch gekennzeichnet, dass** ein Geldbetragswert in einem Datenspeicher der mindestens einen Empfangsvorrichtung (10) gespeichert wird, in der Empfangsvorrichtung (10) die Kosten basierend auf Kostendaten, welche die Kostenbeträge für den Zugriff auf die zugriffskontrollierten Portfolioverwaltungsdaten pro festgelegte Berechnungseinheit umfassen, bestimmt werden und die Kosten für den Zugriff vom gespeicherten Geldbetragswert subtrahiert werden.

30. Computergestütztes Wertschriften-Portfolioverwaltungsystem nach Anspruch 29, **dadurch gekennzeichnet, dass** der genannte Datenspeicher zur Speicherung des Geldbetragswertes eine entfernbare, wiederaufladbare Chipkarte ist.

31. Computergestütztes Wertschriften-Portfolioverwaltungsystem nach einem der Ansprüche 17 bis 30, **dadurch gekennzeichnet, dass** Zugriffsbedingungsdaten, welche mindestens die Kostendaten umfassen, den Portfolioverwaltungsdaten zugeordnet unverschlüsselt und unidirektional über den ersten Kommunikationskanal (20) verbreitet werden.

32. Computergestütztes Wertschriften-Portfolioverwaltungsystem nach einem der Ansprüche 17 bis 31, **dadurch gekennzeichnet, dass** die Zugriffsberechtigungsdaten zusätzlich Zugriffsbedingungsdaten umfassen, welche Zugriffsbedingungsdaten mindestens die Kostendaten umfassen.
